# EUROPEAN PATENT APPLICATION

(11) **EP 1 876 416 A2**
(43) Date of publication of application: **09.01.2008**
(21) Application number: 07013233.7
(22) Date of filing: 06.07.2007
(51) Int. Cl.: G01C 15/00

(54) **Surveying apparatus**

(30) Priority: 07.07.2006 JP 2006187877
(71) Applicant: Kabushiki Kaisha TOPCON, Tokyo 174-8580 (JP)
(72) Inventor: Yamaguchi, Shinji, Itabashi-ku Tokyo 174-8580 (JP)
(74) Representative: LOUIS, PÖHLAU, LOHRENTZ

(57) **Abstract**

The surveying apparatus of the present invention includes a horizontal rotation mechanism (38) for rotating in a horizontal direction a base stand (8) that constitutes a part of a body (7) of the surveying apparatus (2), a vertical rotational mechanism (61) for tilting a telescope (9) provided with the base stand in a horizontal direction, and a collimation target searching unit (20) for searching a collimation target (3) provided with the body.

## Description

### PRIORITY CLAIM

This application claims priority from Japanese Patent Application No. 2006-187877, filed with the Japanese Patent Office on July 7, 2006, the contents of which are incorporated herein by reference in their entirety.

### BACKGROUND OF THE INVENTION

### Field of the Invention

The present invention relates to an improvement of a surveying apparatus that can immediately detect a horizontal position of a collimation target to collimate, without rotating the surveying apparatus over total circumference in the horizontal direction, to orient the surveying apparatus to the direction of the collimation target.

### Description of the Related Art

It has been conventionally known that there is a surveying apparatus that can immediately detect a horizontal position of a collimation target to collimate, without rotating the surveying apparatus over total circumference in the horizontal direction, and that can orient the surveying apparatus to the direction of the collimation target. See, for example, Japanese Patent Publication 2000-346645.

The conventional surveying apparatus includes a horizontal rotational mechanism for rotating the surveying apparatus in a horizontal direction, a controller for controlling the horizontal rotational mechanism, a rough direction detection unit for detecting guide light from all horizontal directions, and a precise direction detection unit provided with a collimation direction of a telescope of the surveying apparatus for detecting the guide light only within the range of a predetermined angle. The controller controls the horizontal rotational mechanism, so that the direction of the surveying apparatus is oriented to the collimating target based on the detection results from the rough direction detection unit, and the surveying apparatus is collimated to the collimating target based on the detection results from the precise direction detection unit.

However, with respect to the conventional surveying apparatus, although the surveying apparatus can be immediately directed to the collimating target, four rough direction detection sensors are necessary, four rough direction detection sensors are necessary in order to detect at least the four directions of front and behind and left and right of the surveying apparatus in the horizontal direction. In addition to this, a precise direction detection sensor is necessary so as to precisely determine a collimation target. This produces a problem that a structure of disposing the detection sensors to the surveying apparatus will be complex.

After detecting a position of a collimator target in the horizontal direction, a telescope is slanted in the high or low angle direction to make an adjustment of matching a position of the collimation target with an optical axis of the telescope. This has a problem of lacking swiftness in a position alignment of the surveying apparatus with respect to the collimation target.

For the foregoing reasons, there is a need for a surveying apparatus that can detect a horizontal position and a vertical position of a collimation mark, without rotating the surveying apparatus over total circumference with respect to the horizontal direction and tilting a telescope in the high or low angle direction with respect to the vertical direction.

### SUMMARY OF THE INVENTION

The present invention is directed to a surveying apparatus that satisfies this need. The surveying apparatus having a body thereof comprises a base stand having a top for constituting part of the body of the surveying apparatus; a horizontal rotation mechanism for rotating the base stand in a horizontal direction; a telescope provided with the base stand; a vertical rotation mechanism for vertically tilting the telescope; and a collimation target searching unit provided with the body for searching a collimation target. The collimation target searching unit comprises a photographic optical system and an image processing unit, the photographic optical system photographs an extraneous image, including a bright spot image based on a guide beam from the collimation target, over total circumference in a horizontal direction and an extraneous image in a high-low direction, and the image processing unit signal-processes the bright spot image obtained by the photographic optical system to calculate a coordinate position in the horizontal direction and a coordinate position in a high-low angle direction with respect to a reference direction of the bright spot image. The surveying apparatus further comprises a control unit provided with the body for controlling the horizontal rotation mechanism and the vertical rotation mechanism, so that an optical axis of the telescope is directed to a direction in which the collimation target is present, based on the coordinate positions obtained by the image processing unit.
Advantageously, the collimation target searching unit is provided at the top of the base stand.
A surveying apparatus further comprises a support having a top provided with the base stand, and the collimation target searching unit is provided at the top of the support.
Advantageously, the collimation target searching unit comprises a convex mirror for reflecting the guide beam from the total circumference to a light receiving sensor, an imaging element for receiving the guide beam from the convex mirror to detect the positions, and a division minor for dividing the guide beam from the convex mirror into the imaging element and the light receiving sensor.
Advantageously, the guide beam is on-off modulated, the imaging element comprises an electronic shutter for controlling a light receiving timing, and the light receiving timing of the electronic shutter is synchronized with the guide beam in response to the light receiving sensor.

### BRIEF DESCRIPTION OF THE DRAWINGS

These and other features, aspects, and advantages of the present invention will become better understood with regard to the following description, appended claims, and accompanying drawings.
Fig. 1 is a schematic view of a surveying apparatus in use in accordance with the invention.
Fig. 2 is a perspective view of an enlarged body of the surveying apparatus shown in Fig. 1.
Fig. 3 is a cross-sectional view of a rough inner structure of the body of the surveying apparatus shown in Fig. 2.
Fig. 4 is a block diagram for illustrating a structure of an image processing unit in the body of the surveying apparatus shown in Fig. 1.
Fig. 5 is a cross-sectional view of an enlarged rough inner structure of a collimation target searching unit shown in Fig. 2.
Fig. 6 is a timing chart for illustrating an operation of the surveying apparatus in accordance with the invention.
Fig. 7 is a model view of an extraneous image derived from the collimation target searching unit shown in Fig. 5.
Fig. 8 is a development of the extraneous image shown in Fig. 7 that is expanded in a rectangular form.
Fig. 9 shows a variation of the body of the surveying apparatus shown in Fig. 1.

### DETATLED DESCRIPTION OF THE INVENTION

Referring to the figures, embodiments of the present invention will be discussed.

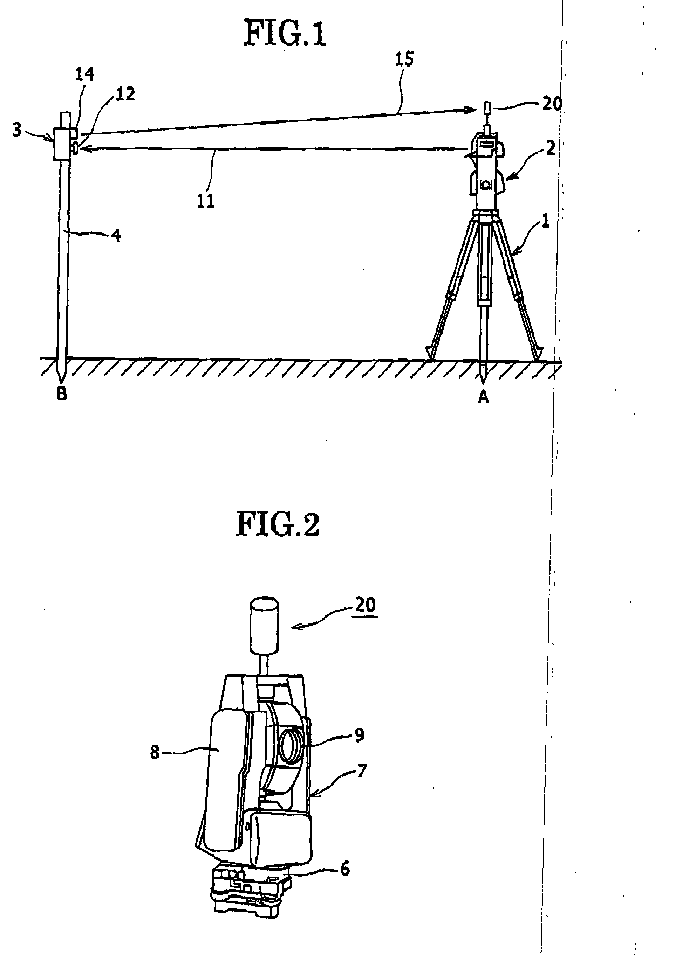

In Fig. 1, reference numeral 1 represents a tripod; 2, a surveying apparatus; 3, a collimation target; and 4, a pole. The tripod 1 is provided with a known point A, while the surveying apparatus 2 is set on the tripod 1. The collimation target 3 is mounted on the pole 4, which is stuck at a target point B.

As shown in Fig. 2, the surveying apparatus 2 includes a board unit 6 attached to the tripod 1 and a body 7 of the surveying apparatus 2 rotatably attached about a vertical axis to the board unit 6. The body 7 contains a base stand 8 and a telescope 9 that is rotatably supported around a horizontal axis on the base stand 8.

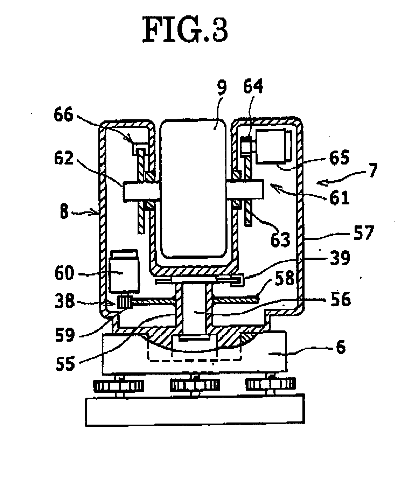

As shown in Fig. 3, inside the base stand 8, the a horizontal rotation mechanism 38 is provided to (horizontally) rotate the body 7 around the vertical axis.

A beating unit 55 is provided with the board unit 5. A horizontal rotation axis 56 is rotatably supported on the bearing unit 55. A housing 57 of the base stand 8 is mounted on the horizontal rotation axis 56.

A horizontal rotation gear 58 is fixed to the bearing unit 55, while a horizontal rotation gear 59 is engaged with the horizontal rotation gear 58.

Provided inside the housing 57 is a horizontal rotation motor 60, whose output shaft is fixed by the horizontal rotation drive gear 59. In the body 7, a horizontal on detector 39 is provided to be opposite to the horizontal rotation shaft 56. The horizontal rotation detector 39 and the horizontal rotation motor 60 are connected to a control unit that will be discussed later.

A vertical rotation mechanism 61 is provided inside the base stand. The telescope 9 is rotatably mounted to the housing 57 through a vertical rotation axis 62, to which a vertical rotation gear 63 is fixed A vertical rotation drive gear 64 is engaged with the vertical rotation gear 63. A vertical rotation motor 65 is provided inside the housing 57, and a vertical rotation drive gear 64 is fixed at an output shaft of the vertical rotation motor 65.

A tilt angle detector 66 is provided to be opposite to the vertical rotation axis 62 inside the housing 57, and the tilt angle detector 66 and the vertical rotation motor 65 are connected to the control unit that will be explained later.

The body 7 is rotated horizontally by the horizontal rotation mechanism 38, and a horizontal angle of the body 7 can be detected by the horizontal rotation detector 39. The telescope 9 is tilted in the high-low angle (vertical) direction by the vertical rotation mechanism 61, so that the tilt angle can be detected by the tilt angle detector 66.

The detection results of horizontal rotation detector 39 and the tilt angle detector 66 are applied to the control unit to be discussed later, which, in turn, controls a drive operation of the horizontal rotation mechanism 38 and the vertical rotation mechanism 61, respectively.

A distance measurement beam 11 is projected toward the collimation target 3 A distance measurement beam 11 is projected toward the collimation target 3 from the body 7. The distance measurement beam 11 is reflected by a reflection unit (comer cube) 12 provided with the collimation target 3. The body 7 receives a reflected beam from the corner cube 12 to measure the distance from known point A to target point B. The collimation target 3 contains a projection device 14 that projects a tracking guide beam 15 to the surveying apparatus 2.

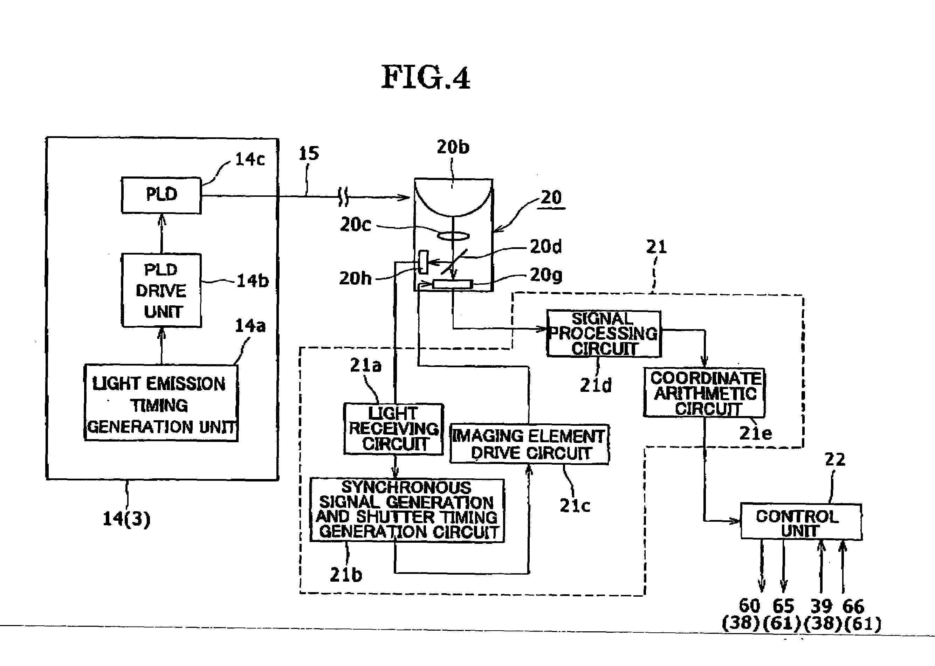

The projection device 14, as shown in Fig. 4, includes a light emission tinting generation unit 14a, a PLD (Pulse Laser Diode) drive unit 14b, and a PLD 14c. The light emission timing generation unit 14a generates a predetermined period of timing pulses. Based on the timing pulse, the PLD drive unit 14b drives the PLD 14c every predetermined period. In response to the timing pulse, the PLD 14c is activated every predetermined period to emit the guide beam 15.

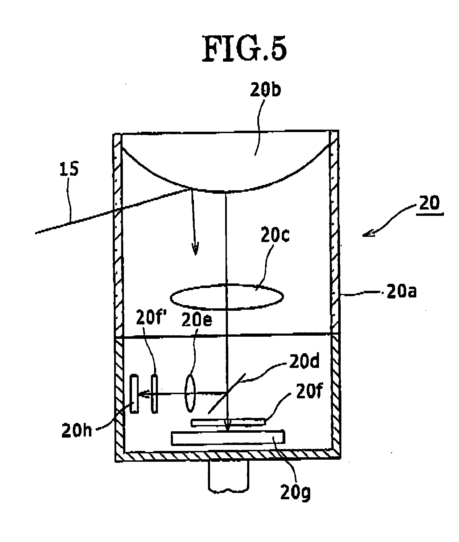

The body 7, as shown in Fig. 2, is provided with a collimation target searching unit 20 on the top of the base stand 8. As shown in Fig. 5, the collimation target searching unit 20 contains a cylinder 20a, a convex mirror 20b, an image formation lens 20c, a division mirror 20d, a light convergence lens 20e, filters 20f and 20f , an imaging element (for example, CCD) 20g, and a light receiving sensor (photodiode), and a signal processing unit that will be described later.

The upper half of the cylinder 20a is transparent, while the lower half is a light shielding unit. The convex mirror 20b is fixed at the top of the cylinder 20a, and the imaging element 20g is set at the lower part of the cylinder 20a. The image formation lens 20c, which is disposed between the convex mirror 20b and the imaging element 20g, makes the imaging element 20g play a role of focusing an extraneous reflected image reflected by the convex mirror 20b.

The division mirror 20d, which is positioned between the image formation lens 20c and the imaging element 20g, has a function of dividing into the imaging element 20g and the light receiving sensor 20h an extraneous reflected image beam that has passed through the image formation lens 20c.

The convex mirror 20b, the image formation lens 20c, and the imaging element 20g constitute a photographic optical system that focuses an extraneous image, including a bright spot image based on the guide beam 15 from the collimation target 3, in all the horizontal directions and in the vertical direction.

The light convergence lens 20e is placed between the division mirror 20d and the light receiving sensor 20h, and the filter 20f' is positioned between the light convergence lens 20e and the light receiving sensor 20h. The light convergence lens 20e has the function of converging a reflected image beam reflected by the convex mirror 20b to illuminate the converged beam to the light receiving sensor 20h. The filter 20f' performs the function of eliminating extraneous light having wavelengths other than the wavelength of the guide beam. The filter 20f, disposed between the division mirror 20d and the imaging element 20g, carries out the same function as that of the filter 20f'.

Each output of the light receiving sensor 20h and the imaging clement 20g is applied to an image processing unit 21 shown in Fig. 4. The image processing unit 21 includes a light receiving circuit 21a, a synchronous signal generation and shutter timing generation circuit 21b, an imaging element drive circuit 21c, a signal processing circuit 21d, and a coordinate arithmetic circuit 21e.

The light receiving circuit 21a receives and shapes an output from the light receiving sensor 20h to supply its output to the synchronous signal generation and shutter timing generation circuit 21b, which, based on the output from the light receiving sensor 20h, generates a synchronous timing signal and a CCD shutter timing signal. The synchronous timing signal and CCD shutter timing signal are furnished to the imaging element drive circuit 21c.

In response to the synchronous timing signal and CCD shutter timing signal, the imaging element drive circuit 21c opens a window of a predetermined time width, and drives the imaging element 20g so that an image signal of the predetermined time width can be incorporated. The image signal is applied to the signal processing circuit 21d.

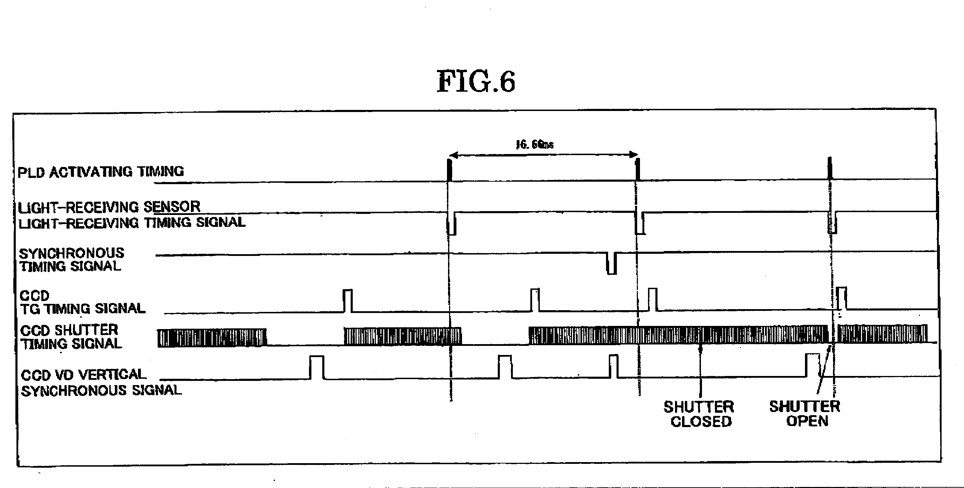

That is, when the PLD (pulse laser diode) 14c emits light at a light emitting timing shown in Fig. 6, the light receiving sensor 20h outputs a light receiving timing signal in reply to the light emitting timing. In response to the light receiving timing signal from the light receiving sensor 20h, the CCD shutter timing signal is synchronized to open an electronic shutter based on the light emitting timing of the PLD 14c. This allows the electronic shutter to be opened only at the time of activating the PLD 14c, which gets rid of noise light harmful to an image signal.

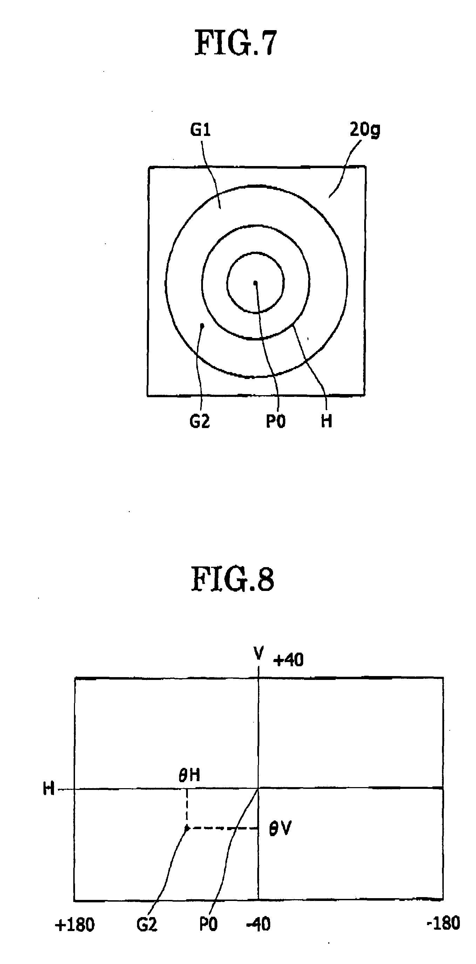

If the filter 20f is not provided for the imaging element 20g, an image containing the extraneous image G1 and the bright spot image G2 of the guide beam 15 is formed annularly as shown in Fig. 7.

The signal processing circuit 21d spread out an annular image formed by the imaging element 20g into a rectangle. Fig. 8 is an image spread in rectangular form.

In Fig. 8, a symbol PO represents a reference direction of the telescope. A symbol H means a horizontal reference line (a range of +180° to -180° with the reference direction PO (0°) of the telescope 9 as a center). A symbol V stands for a high-low angle direction reference line (for example, a range of +40° to -40° with the horizontal reference line H as a 0°).

The output of the signal processing circuit 21d is furnished to the input of the coordinate arithmetic circuit 21e, which, based on the output of the signal processing circuit 21d calculates a horizontal angle θH at which the brilliant spot image G2 of the horizontal direction is present with respect to the reference direction (0°) of the telescope 9, and a tilt angle θV at which the brilliant spot image G2 of the vertical direction is present with respect to the reference direction PO (0°) of the telescope 9.

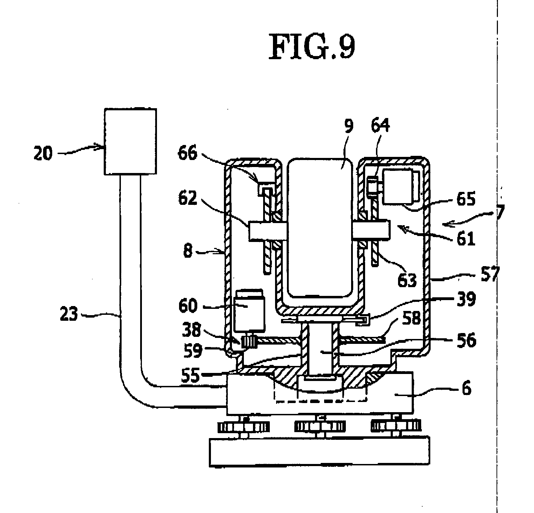

The coordinate arithmetic circuit 21e outputs its operational result to a control unit 22. Based on the operational result, the control unit 22 drives a horizontal rotation motor 60 and a vertical rotation motor 65, as shown in Fig. 9, to rotate the body 7 in the direction at which the brilliant spot image G2 exists and tilt the telescope 9.

Each output of a horizontal rotation detector 39 and a tilt angle detector 66 is consecutively supplied to the control unit 22. When the horizontal angle θH and the tilt angle θV become identical to a horizontal angle and a tilt angle detected by the horizontal rotation detector 39 and the tilt angle detector 66, respectively, the controller 22 stops the rotations of the horizontal rotation motor 60 and the vertical rotation motor 65, respectively.

This enables a horizontal position and a vertical position of the collimation target 3 to be detected, without rotating the body 7 over the total circumference in the horizontal direction and tilting the telescope 9 over the high-low angle in the vertical direction.

When coordinate positions of the collimation target 3 are detected and the optical axis of the telescope 9 is directed to the collimation target 3, the optical axis of the telescope 9 is directed to the collimation target 3 while the base stand 8 and the telescope 9 are simultaneously driven. Accordingly, the optical axis of the telescope 9 of the embodiment of the present invention can be fit to the collimation target 3 more swiftly than a conventional structure.

The collimation target searching unit 20 is provided on the top of the base stand 8 in the embodiment of the present invention. The present invention is not limited to this. For example, as shown in Fig. 9, a support 23 may be provided on the side of the base stand 8, and the collimation target searching unit 20 may be provided on the top of the support 23.

The embodiment of the present invention employs the filters 20f and 20f' to shut out extraneous light other than the guide light 15. Moreover, the embodiment of the present invention constitutes a structure, in which the guide beam 15 is turned on and off with a predetermined period and the window of a predetermined width is provided when the signal based on the bright spot image G2 from the imaging element 20g is read out. Accordingly, the extraneous light and the guide light 15 can be distinguished without providing the filters 20f and 20f'.

According to the present invention, a horizontal position and a vertical position of a collimation mark can be detected, without rotating the surveying apparatus over total circumference with respect to the horizontal direction and tilting a telescope in the or low angle direction with respect to the vertical direction.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A surveying apparatus having a body thereof comprising:
a base stand (8) having a top for constituting part of the body (7) of the surveying apparatus (2);
a horizontal rotation mechanism (38) for rotating the base stand in a horizontal direction;
a telescope (9) provided with the base stand;
a vertical rotation mechanism (61) for vertically tilting the telescope;
a collimation target searching unit (20) provided with the body for searching a collimation target (3), the collimation target searching unit comprising a photographic optical system and an image processing unit (21), the photographic optical system photographing an extraneous image, including a bright spot image based on a guide beam (15) from the collimation target, over total circumference in a horizontal direction and an extraneous image in a high-low direction, the image processing unit (21) signal-processing the bright spot image obtained by the photographic optical system to calculate a coordinate position in the horizontal direction and a coordinate position in a high-low angle direction with respect to a reference direction of the bright spot image; and
a control unit (22) provided with the body (7) for controlling the horizontal rotation mechanism (38) and the vertical rotation mechanism (61), so that an optical axis of the telescope is directed to a direction in which the collimation target is present, based on the coordinate positions obtained by the image processing unit

2. A surveying apparatus as recited in claim 1, wherein the collimation target searching unit is provided at the top of the base stand.

3. A surveying apparatus as recited in claim 1, further comprising a support having a top provided with the base stand, wherein the collimation target searching unit is provided at the top of the support.

4. A surveying apparatus as recited in claim 1, wherein the collimation target searching unit comprises a convex mirror for reflecting the guide beam from the total circumference to a light receiving sensor, an imaging element for receiving the guide beam from the convex mirror to detect the positions, and a division mirror for dividing the guide beam from the convex mirror into the imaging element and the light receiving sensor.

5. A surveying apparatus as recited in claim 1, wherein the guide beam is on-off modulated, the imaging element comprises an electronic shutter for controlling a light receiving timing, and the light receiving timing of the electronic shutter is synchronized with the guide beam in response to the light receiving sensor.
